# EUROPÄISCHE PATENTANMELDUNG

(11) **EP 1 388 785 A1**
(43) Veröffentlichungstag der Anmeldung: **11.02.2004**
(21) Anmeldenummer: 02017624.4
(22) Anmeldetag: 05.08.2002
(51) Int. Cl.: G06F 9/44

(54) **Verfahren und Vorrichtung zur Transformation von Software- und Hardwaremodellen**

(71) Anmelder: The Rationalizer Intelligent Software AG, 14167 Berlin (DE)
(72) Erfinder: Krug, Holger, 14167 Berlin (DE)

(57) **Zusammenfassung**

Die Erfindung betrifft ein Verfahren, ein softwaregesteuertes Gerät und eine Software zur Transformation von Modellen für Software oder Hardware, die sich dadurch auszeichnen, dass die Transformation durch Regeln festgelegt wird, die als Berechnungsvorschriften zu dem Meta-Modell des Transformationszieles hinzugefügt werden.

## Beschreibung

### 1Technisches Gebiet

Die Erfindung gehört zum Gebiet der Verfahren und Vorrichtungen zur Software- und Hardwareerstellung, genauer in das Gebiet der Modellierung von Software und Hardware und der Vorbereitung der Modelle zur Generierung der Software und von Teilen der Software, zur Steuerung der Produktion der Hardware oder deren Prototypen auf Grundlage der Modelldaten und davon abgeleiteter weiterer Daten. Die Erfindung hat außerdem Auswirkung auf das Gebiet der automatischen Kosten- und Aufwandsermittlung für die Software- und Hardwareentwicklung und -produktion, insofern diese Kosten- und Aufwandsermittlung durch die Transformation von Software- und Hardwaremodellen in Kosten- und Aufwandsmodelle geschehen kann.

### 2Stand der Technik

Der Stand der Technik für die Transformation von Software- oder Hardwaremodellen bilden zwei Verfahren. Das eine besteht in der Anwendung von Graph rewriting rules, das andere in der Übersetzung von Modellen in ein Datenformat, für das Transformationswerkzeuge existieren, in der Anwendung dieser Transformationswerkzeuge und in der Rückumwandlung der transformierten Daten in das modellspezifische Format.

Graphen sind Gebilde bestehend aus Ecken, Kanten und eventuellen zusätzlichen Eigenschaften der Ecken oder Kanten. Modelle können als Graphen aufgefasst werden, indem Modellelementtypen als Typen von Ecken, Beziehungen als Kanten und Eigenschaften als Eigenschaften aufgefasst werden. Das an der Universität Aachen entwickelte System PROGRES (siehe Schürr A.: PROGRES, A Visual Language and Environment for PROgramming with Graph REwrite Systems, Technical Report AIB 94-11, RWTH, Aachen, Germany (1994), erhältlich im Internet unter http://www-i3.informatik.rwthaachen.de/research/projects/progres/) stellt ein System zur Transformation von Graphen dar. Dabei können vom Nutzer Graph rewriting rules angeben werden, das sind Regeln zur Transformation eines Teilgraphen. Durch ein System solcher Graph rewriting rules ist eine Transformation von Graphen definiert, die darin besteht, dass so lange die Regeln zur Transformation von Teilgraphen angewandt werden, wie Teilgraphen gefunden werden können, auf die sie anwendbar sind. In der im Mai 2001 an der Universität Ottawa, Canada, eingereichten Dissertation von Hoda Amer (Hoda Amer: Automatic Transformation of UML Software Specification into LQN Performance Models using Graph Grammar Techniques, im Internet erhälrlich unter http://www.sce.carleton.ca/faculty/petriu/theses/HodaAmerThesis.pdf), wird diese Technik angewandt um in der Unified Modeling Language (UML, siehe http://www.omg.org/uml/) formulierte Modelle zu übersetzen.

Der Nachteil dieser Technik besteht darin, dass Graphentransformationen in dort verwendeten Weise außerhalb des Kenntnisbereiches des durchschnittlichen Software- oder Hardwareingenieurs liegen und deshalb in der Praxis nur in Ausnahmefällen Anwendung finden können. Auch muss sich der Ingenieur bei der Definition der Transformationsregeln nicht nur mit der Transformationsquelle und dem Transformationsziel befassen, sondern er muss ein Mannigfaltigkeit von potentiell unendlich vielen Zwischenformen überschauen, die bei der Transformation entstehen können. Das genannte Verfahren nach dem Stand der Technik ist deswegen zu komplex für Transformationsaufgaben aus der technischen Praxis.

Als Zwischensprache zur Durchführung von Transformation auch von Softwaremodellen haben sich in jüngster Zeit die Sprache XML (siehe die Spezifikation im Internet unter http://www.w3.org/TR/2000/REC-xml-20001006) etabliert. Als XML-Dialekt für die Darstellung von Softwaremodellen würde das XML Metadata Interchange (XMI) Format Industriestandard (siehe die Spezifikation im Internet unter http://www.omg.org/mda/specs.htm#XMI). Für XML existieren Transformationswerkzeuge zur Übersetzung eines XML-Dokumentes in ein anderes XML-Dokument unter Anwendung sogenannter XSLT Stylesheets (siehe die relevanten Spezifikationen im Internet unter http://www.w3.org/Style/XSL/). Auf Grundlage dieser existierenden Technologien wurde deshalb experimentellerweise versucht, Modelle in Modelle dadurch zu transformieren, dass ein Modell in ein XMI Dokument übersetzt wird, dieses mittels XSLT-Transformationen in ein anderes XMI Dokument und dieses wiederum in ein Modell.

Der Nachteil dieser Technik besteht darin, dass die XMI Dokumente nur sehr schwer lesbar sind und noch dazu keine eindeutige Beziehung zwischen Modellen und XMI Dokumenten besteht (ein Modell kann in verschiedenen XMI Dokumenten dargestellt werden), und dass ferner die XSLT Transformationstechnik lediglich für einfach Transformationen geeignet ist, aber nicht für die komplexen Berechnungen und den Aufbau von Datenstrukturen, wie es bei der Transformation von Software- und Hardware-Modellen notwendig ist.

### 3Der Erfindung zugrundeliegendes Problem

Die Transformation von Modellen für Software oder Hardware ist notwendig, um Modelle, die in einem Zusammenhang erstellt wurden, in anderen Zusammenhängen nutzen zu können, wo andere Modelle erwartet werden. So kann z.B. das Modell in einer für die Modellierung sehr geeigneten Modellierungssprache erstellt werden und anschliessend in Sprachen übersetzt werden, die eine der folgenden Eigenschaften haben:
- besonders geeignet als Ausgangspunkt für die Codegenerierung,
- besonders geeignet zur Verfügungsstellung der Daten für die Ansteuerung von Produktionsmaschinen,
- besonders geeignet für die Kalkulation von Software oder Hardwareprojekten,
- besonders geeignet als Ausgangspunkt der Konfiguration vorhandener Software.

Der Stand der Technik bietet kein Verfahrens, derartige Transformationen für einen weiten Bereich von Modellen als Transformationsquelle und Transformationsziel zu definieren und auszuführen.

### 4Die Erfindung

Die Erfindung besteht in einem Verfahren zur Transformation von Modellen für Software oder Hardware und in einem Gerät und einer Software, die dieses Verfahren realisieren. Das Verfahren besteht aus zwei Teilverfahren, einem Verfahren zur Definition der Transformationsregeln und einem weiteren Verfahren zur Anwendung der Transformationsregeln.

Das Teilverfahren zur Definition der Transformationsregeln besteht in den folgenden Schritten:
1. Für die im Meta-Models des Transformationsziels definierten Modellelementtypen des Transformationsziels werden Berechnungsvorschriften angegeben, die besagen, wie sich aus der Transformationsquelle und anderen bereits im Transformationsziel berechneten Daten eine Menge von Daten berechnen lässt, die die Modellelemente im Transformationsziel repräsentieren.
2. Für die im Meta-Models des Transformationsziels definierten Eigenschaften von Modellelementtypen des Transformationsziels werden Berechnungsvorschriften angegeben, die besagen, wie aus der Transformationsquelle, der Menge gemäß 1. und anderen bereits im Transformationsziel berechneten Daten der Wert der Eigenschaft berechnet werden kann.
3. Für die im Meta-Models des Transformationsziels definierten Eigenschaften von Instanzen eines Modellelementtypen des Transformationsziels werden Berechnungsvorschriften angegeben, die besagen, wie aus der Transformationsquelle, dem die Instanz repräsentierendem Element der Menge gemäß 1. und anderen bereits im Transformationsziel berechneten Daten der Wert der Eigenschaft berechnet werden kann.
4. Für die im Meta-Models des Transformationsziels definierten Beziehungen zwischen Instanzen von Modellelementtypen des Transformationsziels werden Berechnungsvorschriften angegeben werden, die für beliebige Modellelemente, die aufgrund ihrer Typen in der besagten Beziehung stehen könnten, die Prüfung erlaubt, ob die Modellelemente in der besagten Beziehung stehen oder nicht.

Die Verfahrensschritte 1-4 können auch in anderer Reihenfolge oder parallel durchgeführt werden. Es können auch einige der Verfahrensschritte unterbleiben, wenn das Meta-Modell des Transformationsziels die durch sie berechneten Daten nicht vorsieht oder diese Daten bei der Nutzung des Transformationsziels nicht benötigt werden. Es können auch neue Modellelementtypen, Eigenschaften oder Beziehungen entweder in das Meta-Modell der Transformationsquelle oder das des Transformationsziels eingefügt werden, die Zwischenergebnisse der Berechnung aufnehmen sollen und deren Instanzen bzw. Werte auf die gleiche Weise durch nach den Schritten 1-4 festgelegte Berechnungsvorschriften bestimmt werden.

Für das Teilverfahren zur Anwendung der Transformationsregelns sind in den Patentansprüchen mehrere Ausprägungen angegeben. Das Teilverfahren nach Anspruch 3 besteht in folgenden Schritten:
5. Erstellung der Transformationsquelle
6. Verfügbarmachen der Transformationquelle in einer dem Transformationswerkzeug zugänglichen Schnittstelle
7. Anwendung des Transformationsregeln auf die Transformationsquelle, dadurch Berechnung des Transformationszieles
8. Verfügbarmachen des Transformationszieles in einer für die weitere Nutzung geeignete Weise

In Schritt 7 wird in folgender Weise vorgegangen:

Es wird zunächst ein beliebiger Modellelementtyp des Meta-Modells des Transformationszieles ausgewählt und die Berechnungsvorschrift für die Menge von dessen Instanzen ausgeführt. Die Berechnungsvorschrift kann auf Daten der Transformationsquelle, auf eventuell definierte Zwischenresultate und auf weitere zu berechnende Daten des Transformationszieles zu. Letztere werden berechnet, solange bis alle für die Berechnungsvorschrift notwendigen Daten vorliegen und die Menge der Instanzen berechnet werden kann. Diese wird dann abgespeichert und mit einem weiteren Modellelementtypen in gleicher Weise fortgefahren. Anschliessend werden die Eigenschaften der Modellelementtypen und der inzwischen feststehenden Instanzen ebenfalls berechnet und gespeichert. Anschliessend werden die die Beziehungen definierenden Berechnungsvorschriften auf allen Instanzen ausgeführt, die gemäß ihrem Typ in der jeweiligen Beziehung stehen könnten und es wird abgespeichert, welche Beziehungen bestehen.

Die genannten Schritte bei der Ausführung von Schritt 7 können auch in anderer Reihenfolge ausgeführt werden, es müssen nur die jeweiligen Instanzmengen zuerst berechnet werden, bevor die Eigenschaften der und Beziehungen zwischen den Instanzen berechnet werden können. Bei der Berechnung entstehende Zwischenergebnisse können auch abgespeichert werden, um ihre wiederholte Berechnung zu vermeiden.

Zyklische Definitionen, die bei der vorgestellten Durchführung von Schritt 7 zu nichtterminierenden Schleifen führen würden, können dadurch bei der Ausführung der Berechnungsvorschriften erkannt werden, dass zu Beginn der Ausführung einer jeden Berechnungsvorschrift ein die zu berechnende Entität (Eigenschaft, Beziehung oder Modellelementtyp) eindeutig charakterisierendes Datum auf einen Stapel geschoben wird, das nach dem Ende der Ausführung der Berechnungsvorschrift wieder von dort entfernt wird. Immer dann wenn der Wert einer Entität berechnet werden soll, ist zunächst zu prüfen, ob das die Entität charakterisierende Datum bereits auf dem Stapel vorhanden ist. Wenn ja, wurde eine zirkuläre Definition entdeckt, die dem Nutzer als Fehler berichtet werden muss, wenn nein, kann mit der Berechnung fortgefahren werden.

Das Gerät gemäß den Ansprüchen 8-11 unterstützt bei der Durchführung des genannten Verfahrens in der Weise, dass
- die Modelle (Transformationsquellen und -ziele), Meta-Modelle (der Transformationsquellen und -ziele) und Transformationsregeln verwaltet werden,
- Möglichkeiten zur Erstellung der Modelle (Transformationsquellen) gegeben werden,
- die Transformationsregeln auf die Modelle (Transformationsquellen) angewandt werden,
- Zugriff auf die Transformationsziele gewährt wird.

Die Software gemäß Anspruch 12 realisiert diese Form der Unterstützung bei der Durchführung des Verfahrens bei ihrer Installation auf einem Computer oder ähnlichem Gerät.

### 5Gewerbliche Anwendbarkeit

Die gewerbliche Anwendbarkeit des erfindungsgemäßen Verfahrens, des erfindungsgemäßen softwaregesteuerten Gerätes und der erfindungsgemäßen Software besteht in der Verwendbarkeit bei der gewerblichen Herstellung, Pflege und Wartung von Software, von softwaregesteuerten Systemen und von Hardware. Außerdem sind Anwendungen in der Vorabkalkulation von Software und Hardware und bei der Konfiguration von Software möglich. Erstere dadurch, dass Software- oder Hardwaremodelle in Kalkulationsdaten enthaltende Modelle transformiert werden, letztere dadurch, Modelle in andere Modelle transoformiert werden, die Konfigurationen von Software darstellen oder aus denen solche leicht ableitbar ist.

### 6Vorteilhafte Wirkungen der Erfindung

Der Hauptvorteil der Erfindung gegenüber dem Stand der Technik besteht in der Einfachheit, in der die Transformationsregeln definiert werden können. Die Definition der Transformationsregeln besteht in einer Erweiterung des Meta-Modells des Transformationszieles, mit anderen Worten in einer Erweiterung der Modellierungssprache des Transformationszieles. Dieses ist im allgemeinem dem anwendenden Ingenieur gut bekannt. Außerdem kann es selbst in der gleichen Form wie Modelle dargestellt werden. Die Definition der Erweiterung, d.h. Das Hinzufügen der Berechnungsvorschriften zu dem Meta-Modell des Transformationszieles geschieht in ähnlicher Weise wie die Erstellung von Modellen, also auf eine dem anwendenden Ingenieur bekannte Art und Weise.

Demgegenüber verwenden die Verfahren nach dem Stand der Technik komplizierte Verfahren, die noch dazu sehr verschieden sind von den normalerweise vom Software- oder Hardwareingenieur eingesetzten Techniken. Sie werden deshalb in der Praxis kaum eingesetzt.

### 7Ausführungsbeispiel

Ein Ausführungsbeispiel der Erfindung im Sinne der Ansprüche 1-3, 8 und 12 ist nachstehend unter Bezugnahme auf die zugehörigen Zeichnungen näher erläutert. Es zeigt die Erstellung und Anwendung einer Transformation für eine einfache Modellierungssprache als Meta-Model der Transformationsquelle in eine ebenso einfache Modellierungssprache als Meta-Model des Transformationszieles.

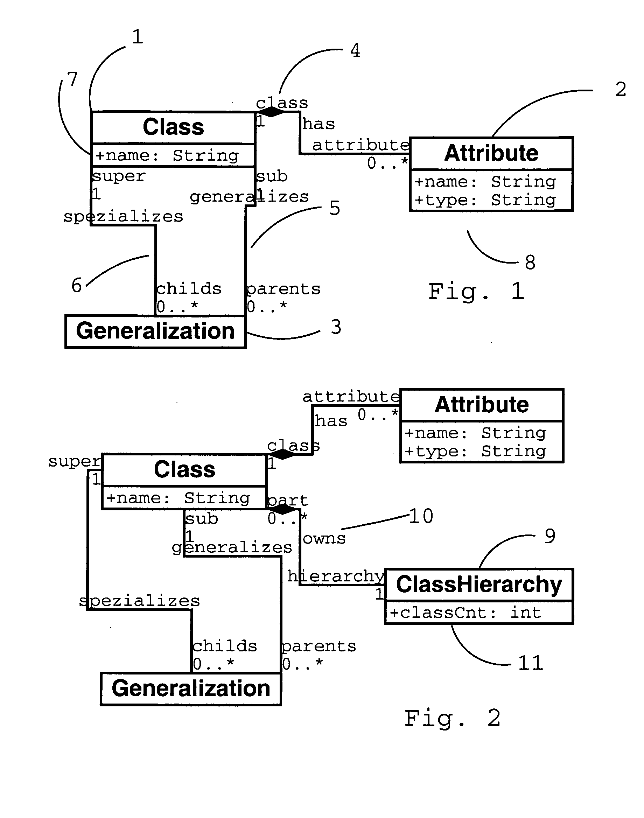

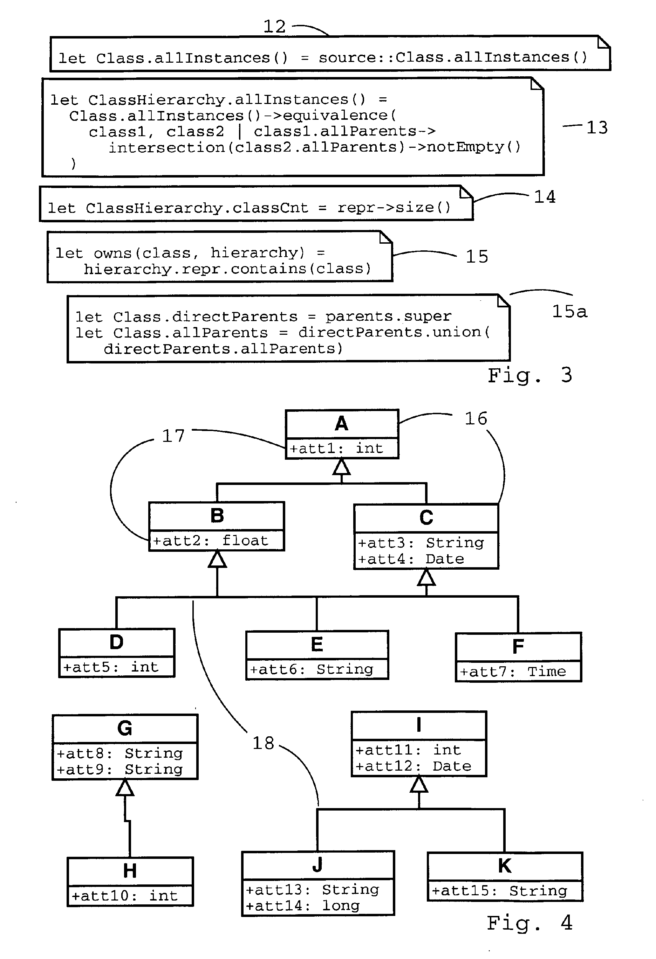

**Fig. 1** - **Fig. 3** stellen der Festlegung der Transformationsregeln dar, **Fig. 4** - **Fig. 5** die Ausführung der Transformationsregelns und **Fig. 6** gibt eine Überblick über das Gesamtsystem.

**Fig. 1** zeigt das Meta-Model einer einfachen Modellierungssprache für Transformationsquellen. Als Meta-Meta-Model zur Definition des Meta-Models wurde die graphische Notation des Industriestandards Meta Object Facility (MOF) verwendet. (Die Spezifikation der MOF findet sich im Internet unter http://www.omg.org/mda/specs.htm#MOF.) **(1), (2)** und **(3)** sind Modellelementtypen, **(4), (5)** und **(6)** definieren Beziehungen zwischen Modellelementen und **(7)** und **(8)** deren Eigenschaften.

**Fig. 1** gibt zugleich den Anblick wieder, den ein Gerät im Sinne der Ansprüche 8-11 bzw. eine auf einem Computer installierte Software im Sinne des Anspruches 12 dem Nutzer zu seiner Information auf das Meta-Modells der Transoformationsquelle gibt.

**Fig. 2** gibt den Anblick wieder, den das Gerät bzw. die Software dem Nutzer auf das Meta-Modell einer anderen einfachen Modellierungssprache für die Transformationsziele gibt, bevor dieser die Berechnungsvorschriften zur Durchführung der Transformation festgelegt hat. In diesem Ausführungsbeispiel ist die Sprache des Transformationszieles der Sprache der Transformationsquelle sehr ähnlich und unterscheidet sich von dieser lediglich durch einen zusätzlichen Typen von Modellelementen **(9),** eine Beziehung **(10)** die für dessen Instanzen mit den Instanzen eines anderen Modellelementypen definiert und eine Eigenschaft **(11)** von Instanzen des zusätzlichen Modellelementtypen.

**Fig. 3** gibt einige der Berechnungsvorschriften wieder, die Nutzer zur Definition der Transformationsregeln festgelegt werden. In der Anzeige durch das erfindungsgemäße Gerät bzw. die erfindungsgemäße Software können diese entweder in Verbindung mit den Modellelementen, Eigenschaften oder Beziehungen, deren Transformationsregeln sie darstellen, angezeigt werden, oder auf Anforderung durch den Nutzer in einem zusätzlichen Fenster erscheinen.

Berechnungsvorschrift **(12)** besagt, dass die Menge aller Instanzen des Modellelementtypen ***Class*** im Transformationsziel als die Menge aller Instanzen des Modellelementtypen ***Class*** in der Transformationsquelle definiert ist. Letztere ist zur Vermeidung von Namensüberschneidung das qualifizierende Präfix ***source::*** vorangestellt.

Berechnungsvorschrift **(13)** besagt, dass die Menge aller Instanzen von ***ClassHierarchy*** bestimmt wird durch eine Äquivalenzrelation auf der Menge aller Instanzen von ***Class*** im Transformationsziel. Die Äquivalenzrelation gemäß der dies geschieht, ist durch den Ausdruck ***class1. allParents->intersection (class2.* allParents)->notEmpty()** definiert, bei dem eine zusätzliche Eigenschaften ***allParents*** von Instanzen des Transformationszieles verwendet wird, die in den Meta-Modell nicht vorkommt, vom Nutzer aber zur Aufnahme von Zwischenergebnissen eingeführt wurde.

Berechnungsvorschrit **(14)** berechnet den Wert der Eigenschaft ***classCnt*** einer Instanz von ***ClassHierarchy*** aufgrund der Grösse der die Instanz von ***ClassHierarchy*** gemäß Berechnungsvorschrift **(13)** repräsentierenden Äquivalenzklasse von Instanzen von ***Class.***

Berechnungsvorschrift **(15)** gibt an, wann zwei Instanzen von ***Class*** und ***ClassHierarchy*** im Transformationsziel in der Beziehung ***owns*** stehen. Berechnungsvorschrift **(16)** führt zusätzliche, im Meta-Modell des Transformationsziels nicht enthaltene Eigenschaften von Instanzen von ***ClassHierarchy*** zur Aufnahme von Zwischenergebnissen ein.

**Fig.4** stellt ein Beispiel einer Transformationsquelle dar. Instanzen von ***Class*** sind durch Rechtecke **(16)** mit dem Klassennamen als Überschrift dargestellt. Den Instanzen von ***Class*** durch die Beziehung **(4)** zugeordnete Instanzen von ***Attribute* (17)** sind mit den Werten von ***name*** und ***type*** in den Rechtecken enthalten. Die Beziehung ***Generalization*** ist durch Pfeile dargestellt, wobei die Pfeilspitze auf die Instanz von ***Class*** mit der Rolle ***super*** zeigt und das andere Pfeilende auf die Instanz von Class mit der Rolle ***sub.***

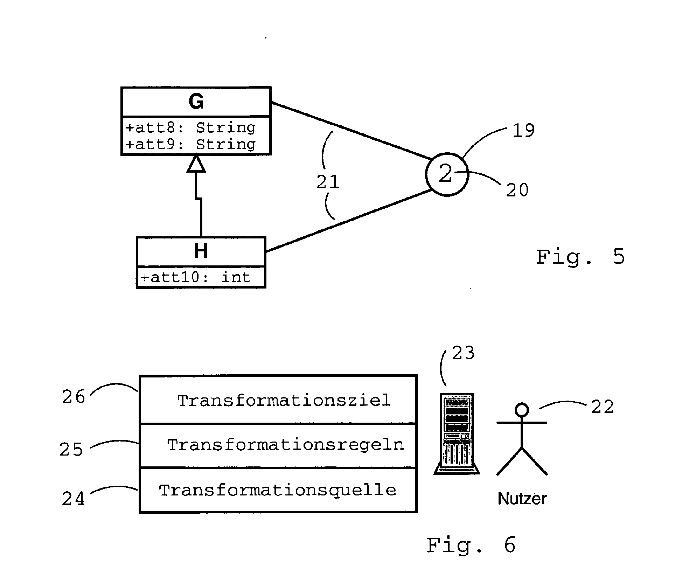

**Fig. 5** stellt einen Ausschnitt des durch Anwendung der Transformationsregeln aus der Transformationsquelle von **Fig. 4** entstehenden Transformationszieles dar. Eine Instanz von ***ClassHierarchy*** ist durch den Kreis **(19)** repräsentiert, der Wert der Eigenschaft ***classCnt*** dieser Instanz durch die in dem Kreis **(19)** enthaltene Zahl **(20).** Durch die Verbindungslinien **(21)** ist angedeutet, welche Instanzen von ***Class*** dieser Instanz von ***ClassHierarchy*** mittels der durch die Berechnungsvorschrift **(15)** bestimmten Beziehung ***owns* (10)** zugeordnet sind.

**Fig. 6** gibt einen Überblick auf das Gesamtsystem, bei dem ein Nutzer **(22)** mit Hilfe eines erfindungsgemäßen Gerätes **(23)** beziehungsweise einer auf dem Computer **(23)** installierten erfindungsgemäßen Software Transformationsquellen **(24)** und Transformationsregeln **(25)** erstellen und verwalten kann und durch Anwendung der Transformationsregelns **(25)** auf die Transformationsquellen **(24)** Transformationsziele **(26)** generieren kann, die dann ebenfalls verwaltet werden können.

## Patentansprüche

1. Verfahren zur Transformation eines Modelles für Software oder Hardware (der Transformationsquelle), das Instanz eines Metamodelles ist, in ein weiteres Modell (das Transformationsziel), das Instanz des gleichen oder eines anderen Meta-Modelles ist, **dadurch gekennzeichnet, dass** beide Meta-Modelle Instanz des gleichen Meta-Meta-Modelles sind, das für seine Instanzen, d.h. für auf ihm basierende Meta-Modelle zumindest das Vorhandensein von Modellelementen, deren Eigenschaften und Beziehungen und optional auch das Vorhandensein von Eigenschaften von Modellelementtypen zulässt, wobei die Transformationsregeln dadurch angegeben werden, dass die Modellelemente, Eigenschaften und Beziehungen im Meta-Modell für das Transformationsziel mit definierenden Berechnungsvorschriften versehen werden, die es erlauben, sie aus den Modellelementen, Eigenschaften und Beziehungen der Transformationsquelle zu berechnen.

2. Verfahren nach Anspruch 1, **dadurch gekennzeichnet, dass** für die Erstellung der Transformationsregeln ein in Software und Hardware oder Hardware alleine realisierter Editor verwendet wird, der dem Nutzer das Meta-Modell des Transformationsziel in graphischer oder struktureller Form anzeigt und dem Nutzer erlaubt, in der graphischen Repräsentation des Meta-Modells des Transformationsziels die definierenden Berechnungsvorschriften hinzuzufügen, wobei der Editor alle oder einen Teil der folgenden zusätzlichen Eigenschaften hat:
a) Zusätzlich zu den Eigenschaften, Beziehungen und Modellelementtypen des Meta-Modells des Transformationsziels werden die definierenden Berechnungsvorschriften dem Nutzer präsentiert.
b) Zu jedem im Meta-Modell für das Transformationsziel definierten Typ von Modellelementen kann vom Nutzer eine Berechnungsvorschrift angegeben werden, die besagt, wie sich aus der Transformationsquelle und anderen bereits im Transformationsziel berechneten Daten eine Menge von Daten berechnen lässt, die die Modellelemente im Transformationsziel repräsentieren.
c) Zu jeder im Meta-Modell für das Transformationsziel definierten Eigenschaft eines Modellelementtypen kann vom Nutzer eine Berechnungsvorschrift angegeben werden, die besagt, wie aus der Transformationsquelle, der Menge gemäß b) und anderen bereits im Transformationsziel berechneten Daten der Wert der Eigenschaft berechnet werden kann.
d) Zu jeder im Meta-Modell für das Transformationsziel definierten Eigenschaft eines Modellelements kann vom Nutzer eine Berechnungsvorschrift angegeben werden, die besagt, wie aus der Transformationsquelle, dem das Modellelement repräsentierenden Element der Menge gemäß b) und anderen bereits im Transformationsziel berechneten Daten der Wert der Eigenschaft berechnet werden kann.
e) Zu jeder im Meta-Modell für das Transformationsziel definierten Beziehung zwischen Modellelementen kann vom Nutzer eine Berechnungsvorschrift angegeben werden, die für beliebige Modellelemente, die aufgrund ihrer Typen in der besagten Beziehung stehen könnten, die Prüfung erlaubt, ob die Modellelemente in der besagten Beziehung stehen oder nicht.
f) Einmal erstellte Berechnungsvorschriften können vom Nutzer auch im Nachhinein modifiziert werden.
g) Die definierenden Teile des Meta-Modells für das Transformationsziel können vom Nutzer weder modifiziert noch gelöscht werden.
h) Die definierenden Berechnungsvorschriften können unabhängig von dem Meta-Modell gespeichert und auch wieder geladen werden.

3. Verfahren nach Anspruch 1, **dadurch gekennzeichnet, dass** für die Anwendung der Transformationsregeln auf die Transformationsquelle in einem Berechnungsdurchlauf geschieht, nach dem der gesamte Inhalt des Transformationsziels in Form von Daten vorliegt, in ähnlicher Weise, wie der Inhalt der Transformationsquelle schon vor Durchführung der Transformation vorlag.

4. Verfahren nach Anspruch 3, **dadurch gekennzeichnet, dass** mehrere Transformationsschritte durchgeführt werden, dass also eine ursprüngliche Transformationsquelle über mehrere Zwischenmodelle, die sowohl Transformationsziel der zu ihnen hinführenden als auch Transformationsquelle der von Ihnen weiterführenden Transformationsschritte sind, in das letzliche Transformationsziel transformiert wird, wobei das letztliche Transformationsziel der Gesamttransformation nach erfolgter Transformation in ähnlicher Form vorliegt, wie der Inhalt der ursprünglichen Transformationsquelle schon vor Durchführung der Transformation vorlag.

5. Verfahren nach Anspruch 1, **dadurch gekennzeichnet, dass** bei Anwendung der Transformationsregeln auf die Transformationsquelle noch gar keine Berechnungen durchgeführt werden, sondern lediglich dem auf das Transformationsziel zugreifenden Nutzer, dem zugreifenden Gerät oder der zugreifenden Software eine Schnittstelle angeboten wird, die der Schnittstelle einer in Form von Daten vorliegenden Instanz des Meta-Modells des Transformationsziels gleichkommt, wobei ein Zugriff auf diese Schnittstelle die Berechnung der Daten durch die Ausführung der Transformationsregeln erst auslöst.

6. Verfahren nach Anspruch 5, **dadurch gekennzeichnet, dass** einmal berechnete Daten, der Berechnung durch Zugriff ausgelöst wurde, für folgende Zugriffe gespeichert werden.

7. Verfahren nach den Ansprüchen 5 oder 6, **dadurch gekennzeichnet, dass** mehrere Transformationsschritte durchgeführt werden, dass also eine ursprüngliche Transformationsquelle über mehrere Zwischenmodelle, die sowohl Transformationsziel der zu ihnen hinführenden als auch Transformationsquelle der von Ihnen weiterführenden Transformationsschritte sind, in das letzliche Transformationsziel transformiert wird, wobei das letztliche Transformationsziel der Gesamttransformation und einige oder alle der Zwischenmodelle nach erfolgter Transformation nicht in Form von Daten vorliegen, sondern eine Schnittstelle anbieten, deren Nutzung die Ausführung der in den Transformationsschritten definierten Transformationsregeln und damit die Berechnung der Daten erst auslöst.

8. Softwaregesteuertes Gerät zur Realisierung des unter 1. genannten Verfahrens, **dadurch gekennzeichnet, dass** eine Komponente zur Erstellung und Bearbeitung von Modellen (den Transformationsquellen) und eine Komponente zur Erstellung von Transformationsregeln derart zusammenarbeiten, dass die Anwendung der Transformationsregeln auf die Transformationsquelle das Transformationsziel ergibt.

9. Softwaregesteuertes Gerät nach Anspruch 8, **dadurch gekennzeichnet, dass** die Komponente zur Erstellung und Bearbeitung von Modellen (den Transformationsquellen) dem Nutzer während der Bearbeitung auch das sich durch Anwendung der Transformationsregeln aus der jeweils aktuellen Form der Transformationsquelle ergebende Transformationsziel anzeigt.

10. Softwaregesteuertes Gerät nach Anspruch 8, **dadurch gekennzeichnet, dass** die Komponente zur Erstellung und Bearbeitung von Modellen nicht Teil des Gerätes ist, sondern die Modelle außerhalb des Gerätes erstellt werden und über eine Importschnittstelle eingelesen werden, so dass das Gerät lediglich die Transformationsregeln auf das Modell anzuwenden hat.

11. Softwaregesteuertes Gerät nach Anspruch 7, **dadurch gekennzeichnet, dass** zirkuläre Definitionen der Eigenschaften, Beziehungen und Modellelement-Typen erkannt werden.

12. Software zu Realisierung des unter 1 genannten Verfahrens auf einem Computer, **dadurch gekennzeichnet, dass** durch Installation der Software auf einem Computer ein Gerät nach zumindest einem der Ansprüche 8-11 entsteht.
